# EUROPÄISCHE PATENTANMELDUNG

(11) **EP 0 893 708 A2**
(43) Veröffentlichungstag der Anmeldung: **27.01.1999**
(21) Anmeldenummer: 98113819.1
(22) Anmeldetag: 23.07.1998
(51) Int. Cl.: G02B 5/02, G02B 6/10

(54) **Lichtleiter mit Vorwärtssteuung**

(30) Priorität: 23.07.1997 DE 19731710
(71) Anmelder: BWF Kunststoffe GmbH & Co. KG, 89362 Offingen (DE)
(72) Erfinder: Fischer, Udo, Dr.-Ing, 64297 Darmstadt (DE)
(74) Vertreter: Jung, Elisabeth, Dr.

(57) **Zusammenfassung**

Die Erfindung bezieht sich auf einen Lichtleiter (2) mit Vorwärtsstreuung, der mindestens eine Lichteinleitungsstelle (22) und mindestens eine gleichmäßig auszuleuchtende größere Lichtaustrittsfläche (6) aufweist, deren Hauptrichtungen normal zueinander orientiert sind, wobei der Lichtleiter (2) ein absorptionsarmes, transparentes Trägermaterial mit eingelagerten absorptionsarmen und transparenten Streupartikeln (4) mit vom Trägermaterial verschiedener Brechzahl aufweist. Nach der Erfindung ist vorgesehen, daß die Streupartikel (4) im Lichtleiter (2) mehr als 1,0 Gew.%, bezogen auf das Trägermaterial, ausmachen und die Lichtaustrittsfläche (6) eine rauhe Struktur aufweist. Vorzugsweise für diesen Fall, insbesondere aber auch als selbständiger alternativer Lösungsweg ist vorgesehen, daß eine rauhe Struktur der Lichtaustrittsfläche (6) von aus der nachbearbeitungsfreien Oberfläche eines extrudierten Formstücks teilweise hervorragenden Streupartikeln (4) gebildet ist.

## Beschreibung

Die Erfindung bezieht sich auf einen Lichtleiter mit Vorwärtsstreuung mit den Merkmalen des jeweiligen Oberbegriffs von Anspruch 1 und Anspruch 5. Ein solcher Lichtleiter ist aus der EP-A2-0 656 548 bekannt.

Dem bekannten Lichtleiter der EP-A2-0 656 548 liegt das Bestreben zugrunde, eine Oberflächenstrukturierung an der Lichtaustrittsfläche zu vermeiden, die als herstellungsmäßig aufwendig empfunden wird. Dabei wird insbesondere als eine derartige unerwünschte Oberflächenstrukturierung auch eine Aufrauhung in Betracht gezogen, wie sie beispielsweise die DE-U1 94 01 126, 93 00 991 und 89 13 036 und die EP-A1-0 533 301 beschreiben.

Der bekannte Lichtleiter der EP-A2-0 656 548 wird unter Vermeidung der unerwünschten Oberflächenstrukturierungen in Formen plattenförmig gegossen. Das Licht wird an mindestens einer Kante der Platte eingeleitet, wobei mindestens eine Flachseite der Platte als Lichtaustrittsfläche dient. Während bis dahin derartige Lichtleiter ganz ohne eingelagerte Streupartikel gebräuchlich waren, werden beim Lichtleiter nach der EP-A2-0 656 548 zum Zwecke einer gleichmäßigen Ausleuchtung der Lichtaustrittsfläche in das transparente Trägermaterial des Lichtleiters ebenfalls transparente Streupartikel mit etwas vom Trägermaterial verschiedener Brechzahl eingelagert, die, bezogen auf das Trägermaterial, vorzugsweise 0,02 bis 0,5 Gew.% ausmachen sollen, wobei allenfalls als Obergrenze des Gewichtsprozentanteils der Streupartikel am Trägermaterial 1,0 Gew.% angegeben ist. Höhere Gewichtsanteile der Streupartikel werden speziell im Vergleich mit der EP-A1-0 342 283 oder der EP-A2-0 269 324 schon deshalb als nachteilig angesehen, weil sie die Lichttransmission erheblich reduzieren und eine starke Trübung verursachen. Bekanntlich nimmt dabei die Lichtstreuung an den Streupartikeln stark mit der Wellenlänge ab, so daß sich bei höheren Gewichtsanteilen von Streupartikeln im Trägermaterial eine merkliche Farbänderung des der Lichtaustrittsfläche von der Innenseite des Lichtleiters aus zugeführten Lichts in Abhängigkeit vom Abstand von der Lichtquelle ergibt.

Der erfindungsgemäße Lichtleiter mit Vorwärtsstreuung ist in einem Hauptanwendungsfall (vgl. Anspruch 17) ebenfalls plattenförmig ausgebildet, wobei ebenfalls die Lichteinleitungsstelle an mindestens einer Kante, meist einer langen Kante, und die Lichtaustrittsfläche an mindestens einer Hauptfläche der Platte angeordnet sind. Für eine gleichmäßige Ausleuchtung der Lichtaustrittsfläche kann sich dabei die Plattendicke von der Lichteinleitungsstelle verjüngen, wozu eine keilförmige Verjüngung an sich bekannt ist, aber im Rahmen der Erfindung auch für eine möglichst konstante Ausleuchtung einer anderen Funktion folgen kann, insbesondere der umgekehrten Proportionalität zur Entfernung von der Lichteinleitungsstelle. Die Erfindung erstreckt sich aber auch in weiteren Anwendungsfällen auf andere Lichtleitergeometrien (vgl. auch Anspruch 18).

Bei allen diesen Anwendungsfällen sind die Hauptrichtungen der jeweiligen Lichteinleitungsstelle und der jeweiligen Lichtaustrittsfläche normal, d.h. unter einem rechten Winkel, zueinander orientiert. Diese Anordnung darf nicht mit durchscheinenden Beleuchtungskörpern, wie z.B. Lampenabdeckungen oder Lichtkuppeln, verwechselt werden, bei denen die Hauptrichtungen von Lichteinfall und Lichtausfall im wesentlichen gleich sind. Selbst wenn insoweit Identität des Materials besteht, sind derartige in Querrichtung durchscheinende Beleuchtungskörper mit den erfindungsgemäßen Lichtleitern, bei denen von der Lichteinleitungsstelle aus das eingeleitete Licht längs der Lichtaustrittsfläche verteilt wird, in ihrer Lichtführung und Wirkung nicht vergleichbar.

Der Erfindung liegt die Aufgabe zugrunde, einen alternativen Aufbau des Lichtleiters anzugeben, der mindestens für bestimmte Anwendungsfälle dem Lichtleiter nach der EP-A2-0 656 548 überlegen ist.

Diese Aufgabe wird gemäß der Erfindung mit den Merkmalen der Ansprüche 1 oder 5 gelöst, wobei insbesondere die Kennzeichnungsmerkmale von Anspruch 5 auch als bevorzugte Realisierungen von Anspruch 1 dienen können.

Nach der Erfindung werden an sich bekannte Mittel neuartig kombiniert. So wird eine Farbverschiebung innerhalb des Lichtleiters in Abhängigkeit vom Abstand zur Lichtquelle aufgrund höherer Gewichtsanteile der Streupartikel am Trägermaterial bewußt in Kauf genommen. Es hat sich dabei gezeigt, daß eine solche Farbverschiebung durch angepaßte Rauhheit der Lichtaustrittsfläche für praktische Fälle völlig ausreichend kompensiert werden kann. Eine solche Rauhheit bietet darüber hinaus den Vorteil, daß die Lichtaustrittsfläche weniger empfindlich als eine glatte Fläche gegen Verkratzen oder auch Verschmutzung durch Oberflächenkontamination mit z.B. fettiger Haut einer Person ist. Als besonders wirkungsvoll erweist sich der erfindungsgemäße Lichtleiter dann, wenn seine Dimensionen relativ klein sind. Die Erfindung eröffnet dabei geradezu neue Anwendungsfälle einer gleichmäßigen Hintergrundbeleuchtung von Informationsflächen, wie beispielsweise Fahrplänen, Praxisschildern, Namensschildern, Hausnummern, kleinen Hinweis- und Informationsschildern, LCD-Anzeigen und LCD-Bildschirmen. Das schließt nicht aus, die erfindungsgemäßen Lichtleiter auch in größeren Anwendungsfällen von Straßenschildern bis zu Werbeflächen einzusetzen.

Eine rauhe Struktur der Lichtaustrittsfläche ist in verschiedenen Ausführungsformen aus der schon erwähnten DE-U1 94 01 126 an sich bekannt. Ferner ist es z.B. aus der DE-A1-42 16 341 an sich bei durchscheinenden Beleuchtungskörpern, wie Lampenabdeckungen und Lichtkuppeln, die gegebenenfalls durch Spritzguß oder Extrusion geformt sind, bekannt, Streupartikel im Trägermaterial von mehr als 1,0 Gew.%, bezogen auf das Trägermaterial, vorzusehen. Dies hat anders als bei der Erfindung den Zweck, das an der Lichteintrittsstelle einfallende Licht zur gegenüberliegenden Lichtaustrittsfläche möglichst stark seitlich zu streuen und so beispielsweise bei Lampenabdeckungen zu erreichen, daß an der Lichtaustrittsfläche das Bild der Lampe nicht mehr erscheint. In diesem mit den Lichtleitern mit Vorwärtsstreuung gemäß der Erfindung nicht vergleichbaren Anwendungsfall sind Streupartikel im Trägermaterial von mehr als 1,0 Gew.%, ja von weit mehr als dieser Grenze, eher typisch.

Die Ansprüche 2 und 3 betreffen bevorzugte Gewichtsanteile der Streupartikel in bezug auf das Trägermaterial, die deutlich oberhalb der Obergrenze gemäß der EP-A2-0 656 548 liegen.

Im Gegensatz zur EP-A2-0 656 548 wird für den Lichtleiter ferner die Ausbildung als extrudiertes Formstück bevorzugt. Abgesehen von größerer Maßhaltigkeit wird dabei insbesondere auch der Lösungsweg der Erfindung gemäß Anspruch 5 realisierbar, die rauhe Oberfläche im Wege des Extrusionsverfahrens unter Ausnutzung der natürlichen Schwundeigenschaften des Trägermaterials selbsttätig zu gewinnen, ohne dabei für die rauhe Oberflächenstrukturierung noch einer aufwendigen Nacharbeitung zu bedürfen, wie dies in der EP-A2-0 656 548 für derartige rauhe Strukturen noch als notwendig unterstellt wird. Diese selbsttätige Einstellung der rauhen Struktur der Lichtaustrittsfläche kann man nach Austritt aus dem Extrusionsmundstück unter Vermeidung einer nachglättenden Kalandrierung erreichen. Diese Art einer Oberflächenprofilierung an der Lichtaustrittsfläche des als extrudiertes Formstück gebildeten Lichtleiters wird auch unabhängig von den kennzeichnenden Merkmalen der Ansprüche 1 bis 3 als erfinderische Gestaltung eines Lichtleiters angesehen, wobei jedoch die Einbeziehung einiger oder aller Merkmale der Ansprüche 1 bis 4 bevorzugt ist.

Wie bisher üblich, haben bevorzugt auch bei dem erfindungsgemäßen Lichtleiter die Streupartikel eine kugelige Form, welche für die Vorwärtsstreuung als zweckmäßig erscheint und zugleich in kontrollierter Weise Lichtanteile über die Lichtaustrittsfläche verteilt.

Gemäß den Ansprüchen 6 bis 9 werden im Rahmen der Erfindung bevorzugt Streupartikel relativ großen Durchmessers eingesetzt. Vergleichsweise sieht die EP-A2-0 656 548 Durchmesser im Bereich von 2 bis 20 µm vor.

Auch im Rahmen des erfindungsgemäßen Lichtleiters können für das Trägermaterial sowie die Streupartikel bekannte Materialien und Strukturen der Streupartikel eingesetzt werden. So beschreibt die EP-A2-0 656 548 als Trägermaterial bereits ein Acrylglas, für das Anspruch 11 im Rahmen der Erfindung bevorzugte mögliche Ersatzstoffe angibt. Als Material der Streupartikel Polystyrol oder Butylacrylat zu verwenden ist beispielsweise aus der EP-A2-0 269 324, Seite 3, erster vollständiger Absatz, bekannt. Phenylmethacrylat als Material der Streupartikel ist in der DE-A1-42 16 341 angegeben. Das Material der Streupartikel jeweils von einer an das Trägermaterial angeglichenen und jeweils in sich vernetzten Schale zu umgeben ist beispielsweise aus der EP-A2-0 269 324 in Verbindung mit der EP-A1-0 342 283 an sich bekannt. Man erhält dabei unter anderem den Vorteil, bei der an sich wünschenswerten Verwendung von Polystyrol als Material der Streupartikel dieses Material durch Anordnung als Kernmaterial in einer Schutzhülle gegen Alterung schützen zu können. Hierbei kann man in bevorzugter Weise für den Fall der Verwendung eines Acrylglases als Trägermaterial Streupartikel einsetzen, deren kugelige Hülle von in sich vernetztem Acrylglas gebildet ist und jeweils einen Kern aus Polystyrol umschließt, wobei der Kern die eigentliche Streufunktion der Streupartikel übernimmt.

Die Ansprüche 14 bis 24 betreffen an die Struktur des erfindungsgemäßen Lichtleiters speziell angepaßte oder anpaßbare anwendungstechnische Weiterbildungen. So nutzt Anspruch 14 die erfindungsgemäß vorgesehene rauhe Struktur der Lichtaustrittsfläche in weiterer Funktion als luftbeaufschlagte Stützfläche für eine auf der rauhen Struktur aufgelagerte beleuchtete Diffuserschicht aus. Diese Diffuserschicht kann selbst als eigenständige Leuchtfläche dienen, z.B. als Hinweis- oder Richtungsschild, oder ein aus anderen Gründen beleuchtetes Bauelement, z.B. Bodenelement, Wandelement oder Deckenelement, oder eine Informationsträgerschicht sein, z.B. bei Fahrplänen, Praxisschildern, Namensschildern oder Hausnummern.

Zum Anspruch 22 sei ergänzend vermerkt, daß die Einpassung einer Lichtquelle in eine Ausnehmung im lichteinleitenden Rand eines plattenförmigen Lichtleiters an sich beispielsweise aus der DE-U1 89 13 036.7 bekannt ist.

Als besonders bevorzugt wird ferner die im Anspruch 23 eröffnete Möglichkeit angesehen, das Lichtaustrittsfenster einer Leuchtdiodenlichtleiste unmittelbar und bündig an die Lichteinleitungsstelle anzuschließen, vorzugsweise durch Verklebung oder Verschweißung. Leuchtdioden sind quasi monochromatische Lichtquellen, die sowieso bei der Vorwärtsstreuung keiner Veränderung einer Farbverteilung unterliegen. Im Sinne von Anspruch 22 kann man einen vergleichbaren Effekt sogar bei unmittelbarem Anschluß einer Leuchtdiode oder einer Leuchtdiodenanordnung an den Lichtleiter in einer Aussparung der Lichteinleitungsstelle erreichen, ohne noch ein zwischengeschaltetes Lichtaustrittsfenster einer Leuchtdiodenlichtleiste zwingend zu benötigen. Mit einer derartigen Konstruktionsweise einer originären Verbindung einer Leuchtdiode oder einer Leuchtdiodenanordnung mit dem Lichtleiter erhält man für sich eine Flächenleuchte als ein anschlußfertiges handelsfähiges Gebilde.

Wie schließlich Anspruch 25 zeigt, kann man die erfindungsgemäße Ausbildung der Trägerschicht mit mehr als 1,0 Gew.% Streupartikeln auch in einem mehrschichtigen Aufbau realisieren, sogar in einem solchen, in dem eine relativ breiten Schicht von Streupartikeln ganz freigehalten ist und nur (mindestens) eine relativ dünne Schicht mit den Streupartikeln im Sinne von Anspruch 1 versehen ist.

Die Erfindung wird im folgenden anhand mehrerer schematischer Zeichnungen an drei Ausführungsbeispielen noch näher erläutert.

Es zeigen:
Fig. 1 eine Explosionszeichnung eines erfindungsgemäßen plattenförmigen Lichtleiters mit an seinen beiden Flachseiten und an seinem Rand anschließbaren bzw. angeschlossenen Ergänzungsteilen und
Fig. 2a und 2b Ansichten des Randes von zwei weiteren erfindungsgemäßen plattenförmigen Lichtleitern mit Schichtaufbau aus zwei Schichten, von denen nur eine, nämlich eine relativ (vorzugsweise sehr) dünne Schicht, im Trägermaterial eingelagerte Streupartikel mit einem erfindungsgemäßen relativen Gewichtsanteil von mehr als 1 % enthält.

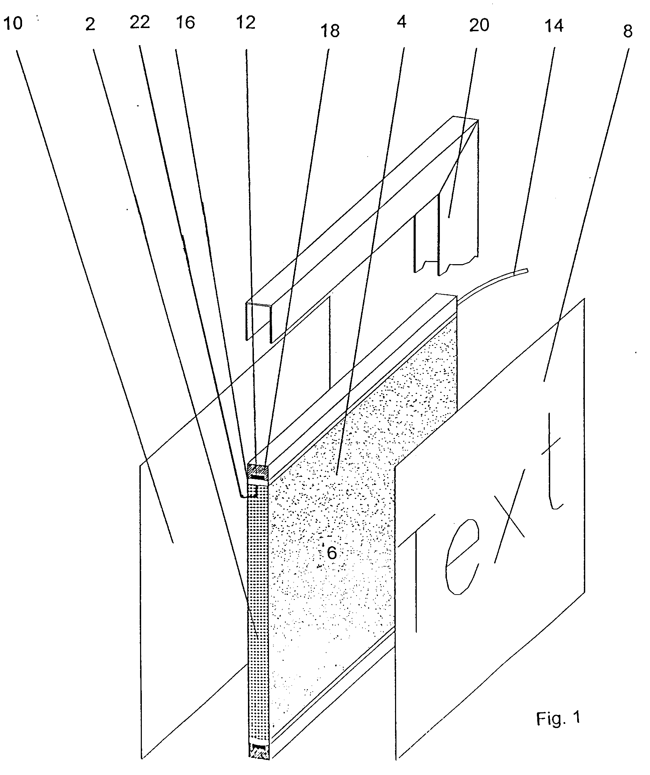

Der plattenförmige Lichtleiter 2 gemäß Fig. 1 besteht aus einem Trägermaterial, z.B. aus einem farblosen Acrylglas (PMMA). In diesem Acrylglas sind kugelige Streupartikel 4 homogen eingelagert, die im gezeigten Ausführungsbeispiel an der Lichtaustrittsfläche 6 etwas in gleichmäßiger enger Flächenverteilung hervortreten und die dargestellte Rauhheit der Lichtaustrittsfläche 6 bilden.

Die hervortretenden Streupartikel 4 an der Lichtaustrittsfläche 6 dienen dabei zugleich als luftbeaufschlagte Stützfläche für eine aufgelagerte beleuchtete Diffuserschicht, die hier eine Informationsträgerschicht 8 ist.

Auf der der Lichtaustrittsfläche 6 abgewandten Flachseite des plattenförmigen Lichtleiters 2 ist eine gleiche Struktur wie die beschriebene der Lichtaustrittsfläche vorgesehen, die hier als luftbeaufschlagte Stützfläche für eine Reflektorplatte 10 dient. Alternativ kann man auch die Reflektorplatte 10 durch eine zweite Informationsträgerschicht 8 ersetzen.

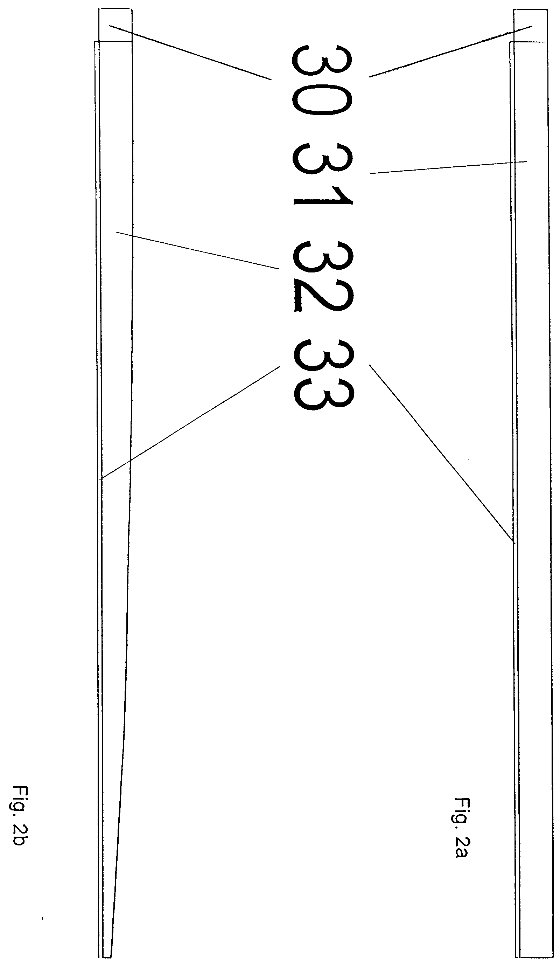

An einem, in einem in den Fig. 2a und 2b jeweils oberen, Rand der plattenförmigen Lichtleiterplatte 2 erstreckt sich über dessen ganzen Länge - oder abweichend von den Abbildungen auch nur über eine geringere Länge - eine Leuchtdiodenlichtleiste. Dargestellt ist dabei eine Leuchtdiodenanordnung 12 auf einem gemeinsamen Leiterstreifen (SMD-LED - Surface Mounted Device-Light Emitting Diodes), die mit einem Stromzuführkabel 14 versehen ist. Die Leuchtdiodenanordnung 12 ist dabei zwischen einem farblosen, transparenten Lichtaustrittsfenster 16 und einem stark reflektierenden U-Profil 18 angeordnet und als eigenständige Leuchtdiodenlichtleiste ausgebildet und gegen äußere Einflüsse geschützt. Das Lichtaustrittsfenster 16 ist dabei zweckmäßig auf den Rand des plattenförmigen Lichtleiters 2 unmittelbar mittels eines transparenten Klebstreifens aufgeklebt oder direkt mit diesem Rand verschweißt. Dieser Rand dient dabei als Lichteinleitungsstelle 22 in den Lichtleiter 2.

Auf dem der beschriebenen Leuchtdiodenlichtleiste abgewandten Rand des plattenförmigen Lichtleiters 2 ist, wie aus der Abbildung unten ersichtlich, eine gleiche Leuchtdiodenlichtleiste in entsprechender Weise montiert. An ihre Stelle kann auch ein Abschluß durch eine Reflektorschicht treten.

Das ganze beschriebene Gebilde ist durch einen den Umfang des plattenförmigen Lichtleiters 2 gegen äußere Einflüsse schützenden Profilrahmen mit nach innen weisendem U-Profil-Rahmen 20 umgeben.

Fig. 2a und 2b zeigen an zwei weiteren Ausführungsbeispielen einen beispielsweise (und vorzugsweise) durch Koextrusion erzeugten zweischichtigen plattenförmigen Schichtaufbau eines erfindungsgemäßen Lichtleiters. Der in die dickere farblose Schicht 31 an der Lichteinleitungsstelle 30 eintretende Anteil des Lichtes kann darin weitere Strecken ohne Ablenkung durch Brechung zurücklegen als in der dünneren vorwärtsstreuenden Schicht 32 bzw. 33. Erst nach Eintritt in die dünnere Schicht 32 bzw. 33 und durch die Vorwärtsstreuung bewirkter Ablenkung kann das Licht über die an mindestens einer der beiden Flachseiten des plattenförmigen Lichtleiters angeordnete(n) Lichtaustrittsfläche(n) austreten und Informationsträger bzw. reflektierende Rückwand (8 bzw. 10 in Fig. 1) beleuchten. Durch eine möglichst geringe Dicke der vorwärtsstreuenden Schicht 33 kann man zusätzlich zur Durchleuchtung lichtdurchlässiger Informationsträger auch im wesentlichen lichtundurchlässige reflektierende an der Schicht 33 anliegende Informationsträger beleuchten und durch Information ohne deutlichen Schärfeverlust durch die Schichten 31 bzw. 32 oder 33 hindurch erkennen.

Bei Beleuchtung von nur einer Kante her empfiehlt es sich, statt der gleichmäßigen Plattenstärke nach Fig. 2a gemäß Fig. 2b die zunächst gleichmäßige Dicke der dickeren farblosen Schicht 31 so mit zunehmender Entfernung zu verringern, daß sich durch stärkere Ausnutzung der Totalreflexion an der Außenseite der Schicht 32 bei größerer Entfernung von der Lichteinleitungsstelle 30 und nach Streuung an der Schicht 33 eine gleichmäßige Beleuchtungsstärkeverteilung auf dem hinter bzw. unter der Schicht 33 angeordneten Informationsträger ergibt.

Die rauhe Struktur der Lichtaustrittsfläche kann je nach Anwendungsfall an der äußeren Flachseite der Schicht 31 und/oder der Schicht 32 bzw. 33 vorgesehen sein, vorzugsweise an der Schicht 32 bzw. 33.

## Patentansprüche

1. Lichtleiter (2) mit Vorwärtsstreuung, der mindestens eine Lichteinleitungsstelle (22) und mindestens eine gleichmäßig auszuleuchtende größere Lichtaustrittsfläche (6) aufweist, deren Hauptrichtungen normal zueinander orientiert sind,
wobei der Lichtleiter (2) ein absorptionsarmes transparentes Trägermaterial mit eingelagerten absorptionsarmen, transparenten und insbesondere in sich vernetzten Streupartikeln (4) mit vom Trägermaterial verschiedener Brechzahl aufweist,
dadurch **gekennzeichnet,**
daß die Streupartikel (4) im Lichtleiter (2) mehr als 1,0 Gew.%, bezogen auf das Trägermaterial, ausmachen und
daß die Lichtaustrittsfläche (6) eine rauhe Struktur aufweist.

2. Lichtleiter (2) nach Anspruch 1, dadurch gekennzeichnet, daß die Streupartikel (4) höchstens 5,0 Gew.%, bezogen auf das Trägermaterial, ausmachen.

3. Lichtleiter (2) nach Anspruch 2, dadurch gekennzeichnet, daß die Streupartikel (4) im Lichtleiter (2) 1,1 bis 3,0 Gew.%, vorzugsweise 1,2 bis 1,5 Gew.%, bezogen auf das Trägermaterial, ausmachen.

4. Lichtleiter (2) nach einem der Ansprüche 1 bis 3, dadurch gekennzeichnet, daß der Lichtleiter (2) ein extrudiertes Formstück ist.

5. Lichtleiter (2) mit Vorwärtsstreuung, der mindestens eine Lichteinleitungsstelle (22) und mindestens eine gleichmäßig auszuleuchtende größere Lichtaustrittsfläche (6) aufweist, deren Hauptrichtungen etwa normal zueinander orientiert sind, wobei der Lichtleiter (2) ein absorptionsarmes transparentes Trägermaterial mit eingelagerten absorptionsarmen, transparenten und insbesondere in sich vernetzten Streupartikeln (4) mit vom Trägermaterial verschiedener Brechzahl aufweist, insbesondere nach Anspruch 4, dadurch gekennzeichnet, daß eine rauhe Struktur der Lichtaustrittsfläche (6) von aus der nachbearbeitungsfreien Oberfläche eines extrudierten Formstücks teilweise hervorragenden Streupartikeln (4) gebildet ist.

6. Lichtleiter (2) nach einem der Ansprüche 1 bis 5, dadurch gekennzeichnet, daß die Streupartikel (4) kugelig sind.

7. Lichtleiter (2) nach einem der Ansprüche 1 bis 6, dadurch gekennzeichnet, daß die Streupartikel (4) einen mittleren Durchmesser von mehr als 20 µm haben.

8. Lichtleiter (2) nach Anspruch 7, dadurch gekennzeichnet, daß die Streupartikel (4) einen mittleren Durchmesser von höchstens 75 µm haben.

9. Lichtleiter (2) nach den Ansprüchen 7 und 8, dadurch gekennzeichnet, daß die Streupartikel (4) einen mittleren Durchmesser im Bereich von 25 bis 50 µm, vorzugsweise bei 30 µm, haben.

10. Lichtleiter (2) nach einem der Ansprüche 1 bis 9, dadurch gekennzeichnet, daß das Trägermaterial ein Acrylglas (PMMA) ist.

11. Lichtleiter (2) nach einem der Ansprüche 1 bis 9, dadurch gekennzeichnet, daß das Trägermaterial ein Polyethylenterephthalat (PET) oder ein Copolymer davon (PETG) ist.

12. Lichtleiter (2) nach einem der Ansprüche 1 bis 11, dadurch gekennzeichnet, daß das Material der Streupartikel (4) ein Polystyrol (PS), ein Phenylmethacrylat oder ein Butylacrylat ist.

13. Lichtleiter (2) nach einem der Ansprüche 1 bis 12, dadurch gekennzeichnet, daß das Material der Streupartikel (4) jeweils von einer an das Trägermaterial angeglichenen und vorzugsweise in sich vernetzten Schale umgeben ist.

14. Lichtleiter (2) nach einem der Ansprüche 1 bis 13, dadurch gekennzeichnet, daß die rauhe Struktur der Lichtaustrittsfläche (6) als luftbeaufschlagte Stützfläche für eine beleuchtete Diffusorschicht vorgesehen ist.

15. Lichtleiter (2) nach Anspruch 14, dadurch gekennzeichnet, daß die Diffusorschicht eine Informationsträgerschicht (8) ist.

16. Lichtleiter (2) nach Anspruch 14 oder 15, dadurch gekennzeichnet, daß die Diffusorschicht eine Leuchtfläche bildet.

17. Lichtleiter (2) nach einem der Ansprüche 1 bis 16, dadurch gekennzeichnet, daß er als ebene oder gebogene Platte ausgebildet ist, in deren Kantenbereich die jeweilige Lichteinleitungsstelle (22) und in deren Flachseitenbereich die jeweilige Lichtaustrittsfläche (6) vorgesehen ist.

18. Lichtleiter (2) nach einem der Ansprüche 1 bis 16, dadurch gekennzeichnet, daß er als geradliniges oder gekrümmtes Stabprofil ausgebildet ist, in dessen Stirnbereich die jeweilige Lichteinleitungsstelle (22) und in dessen Umfangsseitenbereich die jeweilige Lichtaustrittsfläche (6) vorgesehen ist.

19. Lichtleiter (2) nach einem der Ansprüche 1 bis 18, dadurch gekennzeichnet, daß die jeweilige Lichtaustrittsfläche (6) eine Erstreckungsweite, gerechnet von der Lichteinleitungsstelle (22) aus, im Bereich von 5 bis 50 cm, vorzugsweise 20 bis 35 cm, hat.

20. Lichtleiter (2) nach einem der Ansprüche 1 bis 19, dadurch gekennzeichnet, daß an mindestens einer Lichteinleitungsstelle (22) eine in einem feuchtigkeitsdichten Gehäuse (16,18) eingeschlossene Lichtquelle (12) angeschlossen ist, wobei das Gehäuse mindestens gegenüber der Lichteinleitungsstelle (22) transparent (16) ist.

21. Lichtleiter (2) nach Anspruch 20, dadurch gekennzeichnet, daß die Lichtquelle (12) als Leuchtdiodenlichtleiste (12,14,18,22) ausgebildet ist, die unmittelbar an die Lichteinleitungsstelle (22) angeschlossen ist, wobei deren Gehäuse von der Lichteinleitungsstelle (22) und einer aufgesetzten Kappe (18) gebildet ist.

22. Lichtleiter (2) nach Anspruch 20 oder 21, dadurch gekennzeichnet, daß die Lichtquelle mindestens eine Leuchtdiodenanordnung (12) ist, die in einer Aussparung der Lichteinleitungsstelle (22) mindestens teilweise eingesetzt ist.

23. Lichtleiter (2) nach Anspruch 20, dadurch gekennzeichnet, daß die Lichtquelle eine Leuchtdiodenlichtleiste (12,14,16,18) ist, deren Leuchtdiodenanordnung (12) in einem eigenen Gehäuse (16,18) mit Lichtaustrittsfenster (16) , vorzugsweise dem gleichen Material wie das Trägermaterial, eingeschlossen ist und deren Lichtaustrittsfenster (16) an die Lichteinleitungsstelle (22) angesetzt, angelegt oder befestigt ist, vorzugsweise über ein lichtabsorptionsarmes Bindemittel oder Zwischenglied angeklebt oder angeschweißt ist.

24. Lichtleiter (2) nach einem der Ansprüche 1 bis 23, gekennzeichnet durch eine feuchtigkeitsdichte Abdeckeinrichtung für den Bereich der Lichtaustrittsfläche (6).

25. Lichtleiter nach einem der Ansprüche 1 bis 24, gekennzeichnet
durch einen Schichtaufbau in Hauptrichtung der Lichtaustrittsfläche aus mindestens zwei Schichten, von denen die erste Schicht (33) aus dem absorptionsarmen transparenten Trägermaterial mit den eingelagerten Streupartikeln und die gegenüber der ersten Schicht dickere zweite Schicht (31;32) aus dem von diesen Streupartikeln freien absorptionsarmen, transparenten Trägermaterial besteht,
und dadurch, daß die Lichteinleitungsstelle (30) mindestens an der zweiten Schicht (31;32) angeordnet ist.
